# EUROPÄISCHE PATENTSCHRIFT

(11) **EP 2 278 186 B1**
(45) Veröffentlichungstag und Bekanntmachung des Hinweises auf die Patenterteilung: **11.09.2013**
(21) Anmeldenummer: 10007489.7
(22) Anmeldetag: 20.07.2010
(51) Int. Cl.: F16F 9/53, F16F 9/512

(54) **Dämpfereinrichtung für ein Zweirad**
Dampening device for a bicycle
Dispositif d'amortissement pour un deux roues

(30) Priorität: 21.07.2009 DE 102009034296
(43) Veröffentlichungstag der Anmeldung: 26.01.2011
(73) Patentinhaber: DT Swiss AG, 2500 Biel/ Bienne 6 (CH)
(72) Erfinder: Battlogg, Stefan, 6771 St. Anton i.M. (AT); Pösel, Jürgen, 6700 Bludenz (AT); Eisensohn, Gernot, 6771 St. Anton i.M. (AT); Walthert, Martin, 3270 Aarberg (CH)
(74) Vertreter: Schütte, Hartmut

(56) Entgegenhaltungen:
- EP-A1- 1 355 082
- EP-A1- 1 544 498
- WO-A2-99/27273
- JP-A- 59 017 039
- US-A- 6 019 392
- US-B1- 7 445 094

## Beschreibung

Die vorliegende Erfindung betrifft eine Dämpfereinrichtung für ein Zweirad und insbesondere für ein Fahrrad, wie beispielsweise einen Hinterraddämpfer oder eine Federgabel. Ein solches Zweirad kann muskelgetrieben oder auch motorgetrieben sein oder als Fahrrad mit einem Hilfsantrieb ausgerüstet sein.

Im Stand der Technik sind verschiedenste Hinterraddämpfer und Federgabeln für Zweiräder bekannt geworden. Typischerweise umfasst eine Dämpfungseinheit für ein Hinterrad eines Fahrrades wenigstens eine Feder, um auftretende Stöße abzufedern, sowie einen Dämpfer, um die Federschwingung zu dämpfen.

Dämpfer für zweiräder werden zumeist mit einem Dämpfungsfluid, wie beispielsweise Ö1, betrieben. Zur Dämpfung wird das Dämpfungsfluid von einer ersten Dämpfungskammer über ein Strömungsventil in Form z. B. einer Blende gedrosselt zu einer zweiten Dämpfungskammer geleitet. Die Größe der Öffnung der Blende bestimmt die Stärke der Dämpfung. Dabei ist es bei der Anwendung an Fahrrädern gewünscht, die Stärke der Dämpfung lastabhängig einzustellen. So können beispielsweise kleinere Stöße weniger stark gedämpft werden als starke Stöße.

Dokument WO 99/27273 zeigt eine Dämpfereinrichtung, gemäß dem Oberbegriff des Anspruchs 1.

Für ein gutes Ansprechverhalten ist ein Nulldurchgang des Kraft - Geschwindigkeitsverlaufs erforderlich, so dass bei ruhendem Kolben keine Kraft auftritt. Ein Nulldurchgang der Kennlinie des Dämpfers ist für einen homogenen Übergang von der Druck- zur Zugstufe erforderlich.

Es ist deshalb die Aufgabe der vorliegenden Erfindung, einen Dämpfer für ein Zweirad zur Verfügung zu stellen, welcher einen Nulldurchgang der Kennlinie ermöglicht und bei dem eine lastabhängige Dämpfung einstellbar ist.

Diese Aufgabe wird gelöst durch eine Dämpfereinrichtung für ein Fahrrad mit den Merkmalen des Anspruchs 1. Bevorzugte Weiterbildungen der Erfindung sind Gegenstand der Unteransprüche. Weitere Vorteile und Merkmale ergeben sich aus dem Ausführungsbeispiel.

Die erfindungsgemäße Dämpfereinrichtung für ein Zweirad und insbesendere für ein Fahrrad umfasst wenigstens eine erste Dämpferkammer und wenigstens eine zweite Dämpferkammer, welche über wenigstens eine Strömungsverbindung bzw. einen Strömungskanal miteinander gekoppelt sind. Die Strömungsverbindung umfasst wenigstens ein Strömungsventil mit wenigstens einem daran vorgesehenen Dämpfungskanal. Wenigstens in dem Dämpfungskanal des Strömungsventils ist ein magnetcrheologisches Fluid vorgesehen. Das Strömungsventil umfasst weiterhin wenigstens eine Magneteinrichtung. Der Dämpfungskanal bzw. wenigstens ein Dämpfungskanal des Strömungsventils ist wenigstens teilweise einem Magnetfeld der Magneteinrichtung aussetzbar. Ferner umfasst das Strömungsventil wenigstens eine Federeinrichtung und die Magneteinrichtung des Strömungsventils ist an einem Ventilkolben des Strömungsventils vorgesehen. Dabei ist der Ventilkolben innerhalb eines Auslenkraumes aufgenommen und elastisch gegen eine Federkraft der Federeinrichtung auslenkbar, so dass das in dem Dämpfungskanal wirkende Magnetfeld der Magneteinrichtung von der elastischen Auslenkung des Ventilkolbens abhängt.

Die erfindungsgemäße Dämpfereinrichtung hat viele Vorteile. Ein erheblicher Vorteil der erfindungsgemäßen Dämpfereinrichtung ist der elastisch gegen eine Federkraft auslenkbare Ventilkolben, der wenigstens eine Magneteinrichtung aufweist. Wird der Ventilkolben gegen die Federkraft der Federeinrichtung ausgelenkt, ändert sich das durch die Magneteinrichtung in dem Dämpfungskanal erzeugte Magnetfeld. Dadurch ändert sich die Viskosität des magnetorheologischen Fluids in dem Dämpfungskanal, wodurch die Dämpfungseigenschaften der Dämpfereinrichtung entsprechend geändert werden.

Eine Magneteinrichtung im Sinne der vorliegenden Anmeldung ist eine Einrichtung, die ein magnetisches Feld erzeugt. Deshalb kann die Nagnateinrichtung auch Magnetfelderzeugungseinrichtung genannt werden. Vorzugsweise ist die Magneteinrichtung als Dauermagnet ausgebildet ist oder umfasst wenigstens einen Dauermagneten, der im Wesentlichen das Magnetfeld erzeugt. Möglich ist aber auch der Einsatz eines Elektromagneten.

Wird durch eine Verschiebung des Ventilkolbens das in dem Dämpfungskanal, der beispielsweise auch als Dämpfungsspalt ausgeführt sein kann, erzeugte Magnetfeld verstärkt, so bewirkt das verstärkte Magnetfeld eine stärkere Verkettung der einzelnen Partikel in dem magnetorheologischen Fluid, so dass dieses eine entsprechend erhöhte Viskosität aufweist. Dadurch ändert sich der Durchflusswiderstand des magnetorheologischen Fluides durch den Dämpfungskanal und es wird eine höhere Dämpfung erzeugt.

Wird der Ventilkolben wieder zurück bewegt, ändert sich das von der Magneteinrichtung erzeugte Magnetfeld wieder entsprechend und der Dämpfungskanal ist wieder dem ursprünglichen Magnetfeld ausgesetzt. Dabei kann das Magnetfeld in dem Dämpfungskanal durch Auslenkung des Ventilkolbens stärker oder auch schwächer werden.

Möglich ist insbesondere auch eine Auslenkung des Ventilkolbens in unterschiedliche Richtungen für die Zugstufe und die Druckstufe.

Das Strömungsventil kann ein Ventilgehäuse umfassen, in dem der Ventilkolben geführt aufgenommen ist. Auch der Dämpfungskanal kann in dem ventilgehäuse oder außen an dem Ventilgehäuse vorgesehen sein.

Die erste Dämpfungskammer ist mit der zweiten Dämpfungskammer über die Strömungsverbindung gekoppelt. Dies bedeutet, dass insbesondere eine Druckverbindung der ersten Dämpfungskammer mit der zweiten Dämpfungskammer über die Strömungsverbindung besteht, so dass sich eine Druckerhöhung in der ersten Dämpfungskammer über die Strömungsverbindung auf die zweite Dämpferkammer auswirkt. Besonders bevorzugt ist die Strömungsverbindung als Fluidverbindung ausgeführt, so dass nicht nur in dem Bereich des Dämpfungskanals, sondern auch im Bereich der Strömungsverbindung und in der ersten und zweiten Dämpferkammer das magnetorheologische Fluid vorgesehen ist.

Ein solches magnetorheologisches Fluid kann z.B. wenigstens teilweise aus Carbonyl-Eisenpartikeln bestehen, die in einem Trägermedium wie beispielsweise Öl fein verteilt vorhanden sind, wobei verschiedene Zusätze in dem Fluid enthalten sein können, um Korrosion, Abrieb und Sedimentation zu verhindern oder die Lebensdauer zu erhöhen, oder die als Frostschutz oder Hitzeschutz oder dergleichen dienen.

Mit dem Magnetfeld der Magneteinrichtung ist es möglich, wenigstens einen Teil des Dämpfungskanals mit einem magnetischen Feld zu beaufschlagen.

Der Ventilkolben kann auch als Magnetkolben bezeichnet werden und umfasst die Magneteinrichtung und ist vorzugsweise kolbenartig verschiebbar in dem Gehäuse bzw. Ventilgehäuse des Strömungsventils aufgenommen.

Vorzugsweise ist das in dem Dämpfungskanal sich befindende Magnetfeld der Magneteinrichtung in wenigstens einer ausgelenkten Stellung des Ventilkolbens größer als in einer Grundstellung der Magneteinrichtung. Das bedeutet, dass in der Grundstellung der Magneteinrichtung die Viskosität in dem Dämpfungskanal geringer ist als in wenigstens einer ausgelenkten Stellung, wodurch bei zunehmender Auslenkung eine zunehmende Dämpfung bewirkt wird.

Vorzugsweise wird das Magnetfeld der Magneteinrichtung wenigstens in der Grundstellung im wesentlichen an der Magneteinrichtung selbst magnetisch kurzgeschlossen. Das kann durch einen magnetischen Leiter erfolgen, der direkt an der Magneteinrichtung den Nordpol mit dem Südpol verbindet. Dadurch wird das Magnetfeld der insbesondere als Dauermagnet ausgeführten Magneteinrichtung im Dämpfungskanal aufgehoben oder zumindest reduziert, da die größte Felddichte in dem den magnetischen Kurzschluss erzeugendem magnetischen Leiter vorliegt.

Vorzugsweise umfasst die Strömungsverbindung wenigstens einen Strömungskanal, der außerhalb des Ventilkolbens geleitet wird, wobei besonders bevorzugt kein Strömungs- und Dämpfungskanal durch den Ventilkolben selbst geleitet wird. Dadurch erfolgt eine räumliche Trennung zwischen der Steuerung des Ventilkolbens und der daraus resultierenden Steuerung der Dämpfung.

In anderen Ausgestaltungen ist es auch möglich, dass wenigstens eine Strömungsverbindung und/oder wenigstens ein Dämpfungskanal durch den Ventilkolben hindurch geht.

Vorzugsweise ist auf einer ersten Seite des Ventilkolbens ein erster Wirkraum und auf einer zweiten Seite des Ventilkolbens ein zweiter Wirkraum vorgesehen. Dabei ist der erste Wirkraum vorzugsweise mit der ersten Dämpferkammer und der zweite Wirkraum vorzugsweise mit der zweiten Dämpferkammer gekoppelt. Insbesondere besteht eine Strömungsverbindung zwischen dem ersten Wirkraum und der ersten Dämpferkammer und zwischen dem zweiten Wirkraum und der zweiten Dämpferkammer. Durch eine Strömungsverbindung zwischen dem entsprechenden Wirkraum und der dazugehörigen Dämpferkammer kann der in der Dämpferkammer vorliegende Druck direkt auf den Wirkraum und somit auf den Ventilkolben übertragen werden. In einer einfachen und bevorzugten Ausgestaltung sind der erste und der zweite Wirkraum an einem hohlzylindrischen Abschnitt des Strömungsventils aufgenommen und werden durch den sich über den hohlzylindrischen Abschnitt verschieblich angeordneten Ventilkolben voneinander getrennt.

Vorteilhafterweise hängt eine Auslenkkraft auf den Ventilkolben von einer Druckdifferenz des Fluids in dem ersten und dem zweiten Wirkraum ab. Insbesondere steigt die Auslenkkraft auf den Ventilkolben mit zunehmender Druckdifferenz, so dass mit zunehmender Druckdifferenz die Auslenkkraft größer wird und somit auch die erzielte Auslenkung des Ventilkolbens. Darüber wird das in dem Dämpfungskanal wirkende Magnetfeld ebenfalls entsprechend verändert.

Über die Ausbildung der Strömungsverbindung kann die Abhängigkeit der Auslenkkraft von verschiedenen Druckkomponenten wie geschwindigkeitsabhängigem Staudruck, absolutem Druck oder Differenzdruck eingestellt werden. Zudem kann die Reaktionsgeschwindigkeit auf Druckänderungen variiert werden. Durch verhältnismäßig kleine Querschnitte in den Strömungsverbindungen kann beispielsweise die Reaktionsgeschwindigkeit des Dämpfers reduziert werden. Möglich ist es auch, dass die Strömungsverbindung zumindest teilweise von einem Rückschlagventil verschlossen werden kann, um eine von der Bewegungsrichtung abhängige Reaktionsgeschwindigkeit zu erhalten.

In allen Ausgestaltungen ist es bevorzugt, dass die beiden Dämpferkammern in einem Dämpfer angeordnet und durch einen Dämpferkolben voneinander getrennt sind.

Vorteilhafterweise weist die erfindungsgemäße Dämpfereinrichtung eine Federeinrichtung auf, die als Gasfeder, Luftfeder, Spiralfeder, Elastomerfeder oder dergleichen ausgeführt sein kann und die zur Abfederung der Stöße dient. Die Federeinrichtung kann direkt mit dem Dämpfer gekoppelt sein.

In bevorzugten Ausgestaltungen ist der Ventilkolben in dem Dämpferkolben angeordnet. Das bedeutet, dass der Ventilkolben in dem Dämpferkolben gegenüber dem Dämpferkolben verschiebbar angeordnet ist, um mit dem Ventilkolben die Magneteinrichtung bzw. den Dauermagneten oder die Dauermagneten des Ventilkolbens je nach Betriebszustand auszulenken. Eine solche Ausgestaltung ermöglicht einen besonders kompakten Aufbau. Möglich ist es aber auch, dass das Strömungsventil außerhalb des Dämpfers vorgesehen ist und die beiden Dämpferkammern extern miteinander verbindet.

Der Ventilkolben ist vorzugsweise axial verschieblich bzw. verschiebbar an dem Strömungsventil aufgenommen und die Magneteinrichtung weist an einem axialen Ende den Nordpol und an dem anderen axialen Ende den Südpol auf.

Der erste Wirkraum ist insbesondere an einer ersten inneren Ausnehmung und der zweite Wirkraum an einer zweiten inneren Ausnehmung des Strömungsventils vorgesehen, wobei sich vorzugsweise der Ventilkolben wenigstens über einem Abschnitt der ersten inneren Ausnehmung und der zweiten inneren Ausnehmung axial verschieben lässt. Die Wirkräume sind vorzugsweise durch das Magnetfeld des Dauermagneten zueinander abgedichtet.

Vorzugsweise ist in wenigstens einem Wirkraum die Federeinrichtung angeordnet, die den Ventilkolben aus seiner ausgelenkten Stellung in die Grundstellung zurück drängt.

In der Grundstellung wirkt vorzugsweise keine Federkraft der Federeinrichtung auf den Ventilkolben. Dazu kann ein Anschlag vorgesehen sein, gegen den die Federeinrichtung in der Grundstellung des Ventilkolbens drückt. Das bedeutet, dass der Ventilkolben in der Grundstellung unbelastet durch die Federeinrichtung ist. Der Anschlag kann verstellbar ausgeführt werden.

Vorzugsweise ist wenigstens eine Federeinrichtung für die Zugstufe und es ist wenigstens eine Federeinrichtung für die Druckstufe vorgesehen. Dabei können die beiden Federeinrichtungen von der gleichen bzw. von der jeweils gegenüberliegenden Seite auf den Ventilkolben einwirken.

Sind beiden Federeinrichtungen Anschläge zugeordnet, so wirken in der Grundstellung keine Federkräfte auf den Ventilkolben ein. Eine solche Ausgestaltung ermöglicht es, die Federeinrichtung auf der ersten Seite in dem ersten Wirkraum mit einer anderen Federsteifigkeit auszurüsten als die Federeinrichtung auf der anderen, zweiten Seite in dem zweiten Wirkraum. Darüber werden unterschiedlich starke Federkräfte für die Druckstufe und für die Zugstufe ermöglicht. Durch eine geeignete Auswahl der Federeinrichtungen, geeignete Positionierung der Anschläge und eine geeignete Auswahl der Magneteinrichtung, sowie durch eine geeignete Gestaltung der Dämpfungskanäle ist der Verlauf der Dämpferkennlinie wie gewünscht einstellbar.

Um ggf. die Dämpfungseigenschaften der Dämpfereinrichtung einstellen bzw. verstellen zu können, kann eine Steuerstange zur Einstellung der Kennlinie wenigstens einer Federeinrichtung vorgesehen sein. Möglich ist es, dass mit der Steuerstange eine Position eines Anschlags und/oder ein Querschnitt eines Dämpfungskanals oder einer sonstigen Blende beeinflusst wird.

Vorzugsweise werden der erste Wirkraum und der zweite Wirkraum von einem Innenrohr begrenzt, wobei das Innenrohr in dem Bereich der Magneteinrichtung des Ventilkolbens in der Grundstellung magnetisch leitend ausgebildet ist, während das Innenrohr an den axialen Enden der Magneteinrichtung jeweils von einer magnetischen Isolierschicht gebildet wird, an die sich wiederum beidseits in axialer Richtung magnetisch leitende Bereiche anschließen.

Durch eine solche Ausgestaltung wird ein magnetischer Kurzschluss der Magneteinrichtung in der Grundstellung bewirkt. Das an oder auch in der Nähe der Magneteinrichtung magnetisch leitend ausgebildete Innenrohr führt zu einem magnetischen Kurzschluss der Magneteinrichtung in der Grundstellung, so dass nur ein geringer Teil des Magnetfeldes der Magneteinrichtung sich außerhalb der Magneteinrichtung befindet. Eine axiale Verschiebung der Magneteinrichtung führt dann dazu, dass der magnetische Kurzschluss der Magneteinrichtung mit zunehmender Auslenkung immer weiter aufgehoben wird, so dass sich ein erheblicher Teil des magnetischen Feldes außerhalb des Innenrohres bildet.

In bestimmten Ausgestaltungen wird das Innenrohr von einem magnetischen Isolator und einem magnetisch leitenden Außenrohr umgeben. Dabei ist es bevorzugt, dass der Dämpfungskanal an einem axialen Ende des Innenrohrs vorbeiführt. Insbesondere ist der Dämpfungskanal in dem Bereich des axialen Endes des Innenrohres radial oder etwa radial ausgerichtet. Insbesondere erstreckt sich der Dämpfungskanal etwa senkrecht zu dem aus dem axialen Ende des Innenrohres austretendem Magnetfeld, welches den Dämpfungskanal bzw. den Dämpfungsspalt durchquert und in das Außenrohr eintritt, wo das magnetische Feld zu einem anderen axialen Ende geleitet wird und dort über einen zweiten Dämpfungskanal wieder in das Innenrohr eingeleitet wird, so dass ein geschlossenes Magnetfeld entsteht.

In anderen Ausgestaltungen kann das Innenrohr ebenfalls von einem magnetischen Isolator und einem magnetisch leitenden Außenrohr umgeben sein. Ein axialer Dämpfungsspalt liegt radial außen an den Innenrohr oder umgibt das Innenrohr in radialer Richtung vollständig. Dann kann auf einen das Innenrohr umgebenden magnetischen Isolators verzichtet werden. Der Dämpfungskanal führt über wenigstens einen Teil der axialen Länge des Innenrohrs axial an diesem vorbei. Das Magnetfeld erstreckt sich zur Erhöhung der Dämpfung radial oder wenigstens teilweise radial durch den axialen Dämpfungsspalt und bewirkt dort eine entsprechende Verkettung in dem magnetorheologischen Fluid, wodurch der Durchfluss durch den Dampfungskanal entsprechend gedämpft wird. Das Magnetfeld wird durch ein Außenrohr geschlossen, welches z.B. durch den Dämpfungskolben gebildet werden kann.

Unterschiedliche Verläufe der Kennlinie des Dämpfers sind leicht umsetzbar. So kann z. B. eine mit steigender Auslenkung des Ventilkolbens abnehmende Kraft ebenfalls realisiert werden. Der Aufbau des Innenrohrs aus magnetisch leitenden und nicht leitenden Segmenten wird dazu angepasst, um die gewünschten Magnetverläufe zu erzeugen.

In allen Ausgestaltungen ist es möglich, dass ein mechanisches Steuerventil vorgesehen ist, welches beim Überschreiten eines vorbestimmten Drucks öffnet, um in der Zugstufe und/oder in der Druckstufe eine zusätzliche Strömungsöffnung zu bieten, wenn ein vorbestimmter Druck überschritten wird.

Insbesondere ist ein mechanisches Steuerventil als Shim-Ventil ausgeführt, welches insbesondere eine Mehrzahl dünner Plättchen umfasst. Ein solches Shim-Ventil führt zu einer günstigen Abflachung der Ansprechkurve der Dämpfereinrichtung, wodurch bei hohen auftretenden Kräften eine entsprechende Dämpfung zur Verfügung gestellt wird.

In allen Ausgestaltungen ist es bevorzugt, dass wenigstens eine Heatpipe-Einrichtung mit wenigstens einem Wärmerohr vorgesehen ist, um die bei der Dämpfung entstehende Wärme abzuführen.

Es kann eine Kühleinrichtung vorgesehen sein, welche das Wärmerohr, eine Konvektionseinheit und eine Rückflusseinrichtung umfasst, wobei die Konvektionseinheit die bei der Dämpfung entstehende Wärme aufnimmt, weiter transportiert und an die Umgebung abgibt. Die Rückflusseinrichtung sorgt für einen Rückfluss des kondensierten Wärmemediums, um das kondensierte Wärmemedium wieder in die Nähe der Dämpfungsöffnung zum Dämpfungskanal zurück zu transportieren. Die Ruckflusseinrichtung kann durch einen Metallgewebeabschnitt gebildet werden, der das kondensierte Fluid nach der Kondensation auch entgegen der Schwerkraft durch die Kapillarkräfte zurück transportiert.

Dabei ist das Wärmerohr der Heatpipe-Einrichtung mit einem solchen Wärmemedium derart gefüllt, dass das Wärmemedium in dem Wärmerchr wenigstens bei einer Temperatur zwischen 20° und 60° zu erheblichen Anteilen dampfförmig und zu erheblichen Anteilen flüssig vorliegt.

Weitere Vorteile und Eigenschaften der vorliegenden Erfindung ergeben sich aus dem Ausführungsbeispiel, das mit Bezug auf die beiliegenden Figuren 1 - 4 im Folgenden beschrieben wird.

In den Figuren zeigen:
- Fig. 1: eine geschnittene schematische Seitenansicht einer er- findungsgemäßen Dämpfereinrichtung in der Grundstel- lung;
- Fig. 2: eine geschnittene Seitenansicht der Dämpfereinrichtung nach Fig. 1 in der Druckstufe;
- Fig. 3: eine leicht variierte Dämpfereinrichtung gemäß Fig. 1 in der Zugstufe; und
- Fig. 4: eine vergrößerte schematische Darstellung eines anderen Strömungsventils für eine Dämpfereinrichtung; und
- Fig. 5: eine vergrößerte schematische Darstellung des Strö- mungsventils der Dämpfereinrichtung gemäß Fig. 1 in der Druckstufe.

Mit Bezug auf die beiliegenden Figuren werden Ausführungsbeispiele erfindungsgemäßer Dämpfereinrichtungen 1 beschrieben.

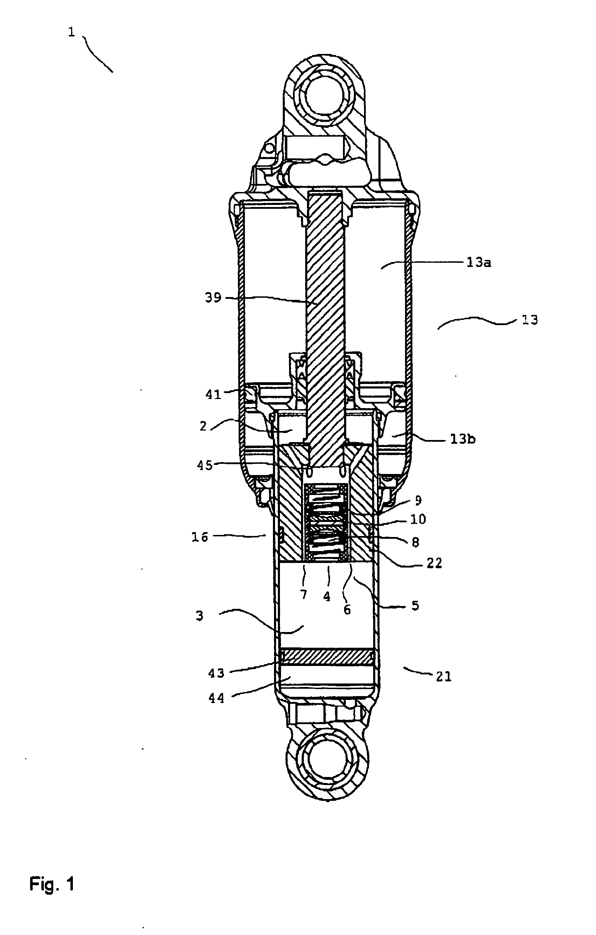

Die Dämpfereinrichtung 1 nach Fig. 1 umfasst einen Dämpfer 21 mit einer ersten Dämpferkammern 2 und einer zweiten Dämpferkammer 3, die hier durch den Dämpferkolben 22 des Dämpfers 21 voneinander getrennt sind. Der Dämpferkolben 22 ist mit der Kolbenstange 39 verbunden.

Eine Ausgleichsfeder 44 ist an der Dämpferkammer 3 vorgesehen, die über einen Ausgleichskolben 43 von der Dämpfungskammer 3 getrennt ist. Die Ausgleichsfeder 44 gleicht das sich durch die eintauchende Kolbenstange 39 reduzierende Gesamtvolumen der Dämpfungskammern 2 und 3 entsprechend aus.

Eine Strömungsverbindung 4 zwischen der ersten Dämpferkammer 2 und der zweiten Dämpferkammer 3 wird hier über die Durchgangsöffnungen 45 und das Strömungsventil 5 zu Verfügung gestellt. Das Dämpfungsfluid und damit die Durchströmung wird dabei durch das Strömungsventil 5 beeinflusst.

Im oberen Bereich ist eine als Gasfeder ausgeführte Feder 13 vorgesehen, welche Federkammern 13a und 13b umfasst, die durch einen Gaskolben 41 voneinander getrennt sind.

Die Strömungsverbindung 4 zwischen den Dämpferkammern 2 und 3 wird hier über die Dämpfungskanäle 6 und 7 des Strömungsventils 4 zur Verfügung gestellt.

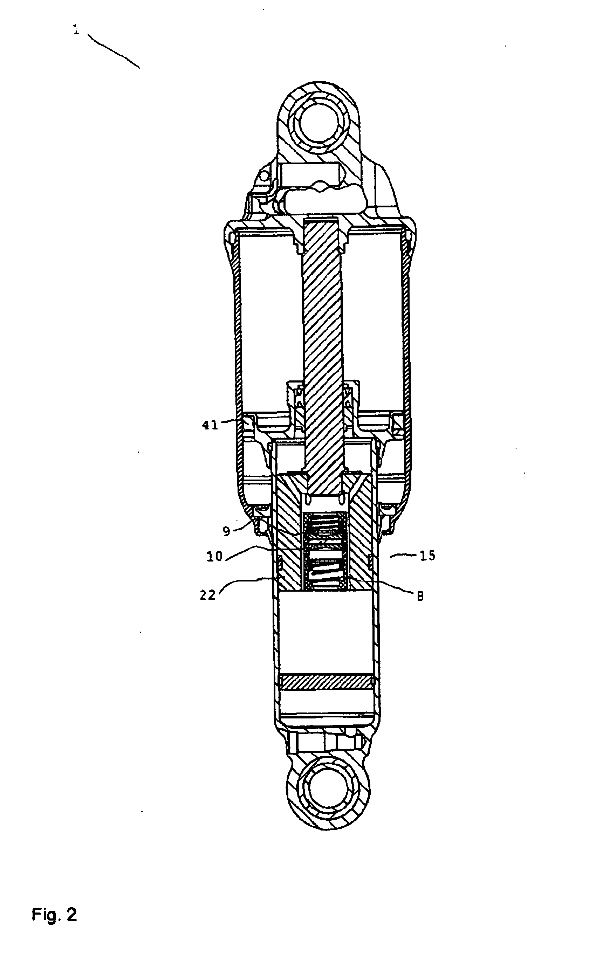

Tritt ein starker Stoss auf, so wird der in der Fig. 1 dargestellte Dämpfer 21 in den in Fig. 2 dargestellten Zustand überführt, in dem sich das Strömungsventil 5 in der Stufe der Druckstufendämpfung befindet. Die Magneteinrichtung ist hier als Dauermagnet 10 ausgeführt und ist hier nach oben gegen die Federkraft der hier als Spiralfeder ausgeführten Federeinrichtung 9 ausgelenkt.

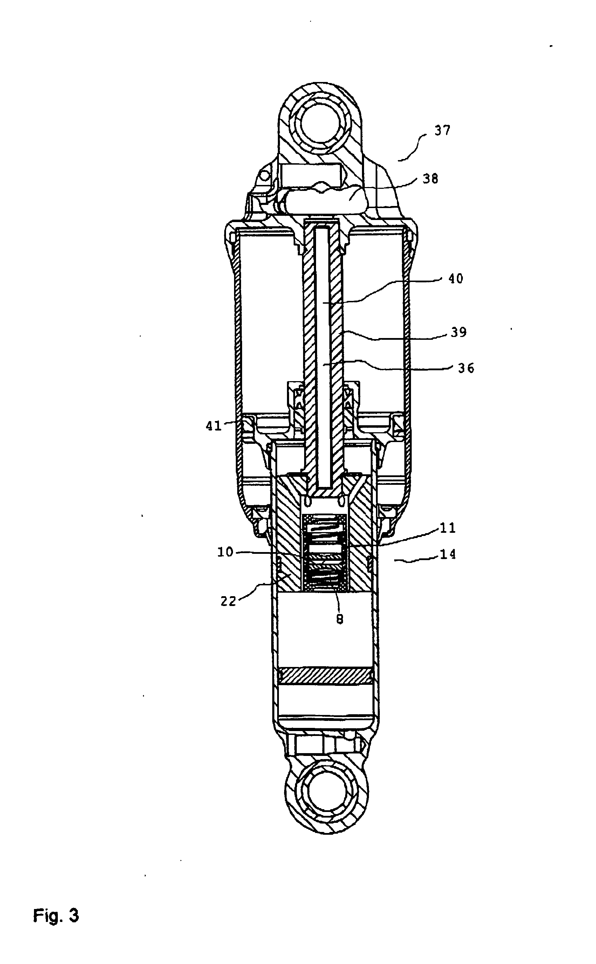

In der Zugstufe hingegen wird, wie in Fig. 3 dargestellt, der Dauermagnet 10 des Ventilkolbens 11 des Strömungsventils 5 nach unten gegen die Federkraft der Federeinrichtung 8 ausgelenkt.

Bei dem Ausführungsbeispiel gemäß Fig. 3 ist eine Variante dargestellt, bei der an der Kolbenstange 39 eine Steuerstange vorgesehen oder integriert sein kann. An der Kolbenstange 39 ist hier das Wärmerohr 40 vorgesehen, welches die bei der Dämpfung entstehende Wärme mit nur einem geringen Temperaturgradienten schnell und zuverlässig aus dem Dämpfer 21 hinausbefördert. Dazu kann an einem oberen Ende des Wärmerohrs eine Konvektionseinheit 38 vorgesehen sein, welche beispielsweise über Kühlrippen verfügt, um die von der Heatpipe aufgenommene Wärme effektiv an die Umgebung abzugeben.

Ansonsten entspricht das Ausführungsbeispiel gemäß Fig. 3 dem Ausführungsbeispiel gemäß Fig. 1 und 2, wobei in Fig. 3 die ausgelenkte Stellung 14 der Zugstufe abgebildet ist.

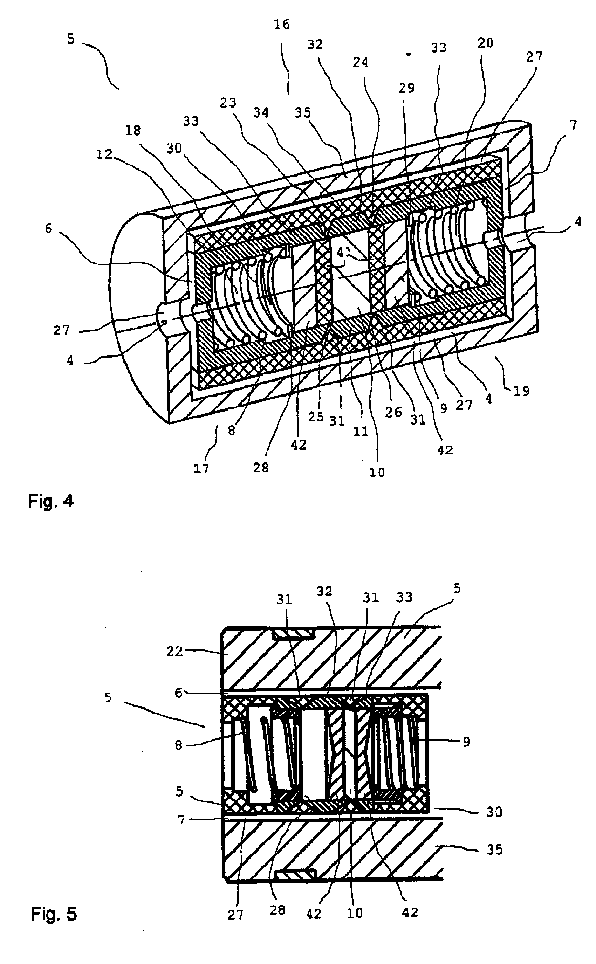

In den Figuren 4 und 5 sind zwei unterschiedliche Strömungsventile 5 dargestellt, die grundsätzlich beide an einer erfindungsgemäßen Dämpfereinrichtung 1 eingesetzt werden können. Dabei ist in Fig. 4 eine Variante eines Strömungsventils 5 dargestellt, während Fig. 5 die in den Figuren 1 bis 3 vorhandene Ausgestaltung des Strömungsventils 5 zeigt. Mit einer entsprechenden Anpassung des Dämpferkolbens 22 kann aber auch das Strömungsventil 5 nach Fig. 4 Verwendung finden.

Das Strömungsventil in den Figuren 4 und 5 stellt jeweils eine Strömungsverbindung 4 über die Strömungskanäle 27 und die Dämpfungskanäle 6 und 7 zur Verfügung, wobei die Dämpfungskanäle 6 und 7 in Fig. 4 an den axial auseinanderliegenden Endabschnitten hier im Ausführungsbeispiel radial von außen nach innen verlaufen, so dass durch die zentralen Öffnungen der Strömungsverbindung 4 das Dämpfungsfluid von der ersten Dämpferkammer 2 über das Strömungsventil 5 in die zweite Dämpfungskammer 3 überführt werden kann. Im Ausführungsbeispiel nach Fig. 5 verlaufen die Dämpfungskanäle 6 und 7 hingegen in axialer Richtung.

Das in Fig. 4 dargestellte Strömungsventil 5 weist ein Innenrohr 30 auf, welches außer im Bereich der axialen Enden des Dauermagneten 10 aus einem magnetisch leitfähigen Material besteht. An den axialen Enden 23 und 24 des Dauermagneten 10 befinden sich der Nordpol 25 bzw. der Südpol 26 und im Bereich des Innenrohrs 30 befinden sich dort magnetische Isolierschichten 31.

Weil an dem Dauermagneten 10 sowohl der Nordpol 25 als auch der Südpol 26 von dem magnetisch leitenden Bereich 32 des Innenrohrs 30 abgedeckt werden, wird das magnetische Feld des Dauermagneten 10 in der in Fig. 5 dargestellten Grundstellung 16 im wesentlichen magnetisch kurzgeschlossen, so dass sich die Feldlinien des Magnetfeldes praktisch nur innerhalb des leitenden Bereiches 32 des Innenrohres 30 befinden.

Wird der Dauermagnet 10 aus seiner Grundstellung 16 in eine axiale Richtung (rechts oder links) ausgelenkt, so wird mit zunehmender Auslenkung der Anteil des magnetischen Kurzschlusses in dem leitenden Bereich 32 reduziert, während gleichzeitig ein zunehmender Anteil des Magnetfeldes sich durch den leitenden Bereich 33 des Innenrohres in axialer Richtung erstreckt. An den axialen Enden tritt das Magnetfeld in axialer Richtung aus dem Innenrohr 30 aus und durchquert die Dämpfungskanäle 6 und 7, die sich hier in etwa radialer Richtung erstrecken. Durch die zunehmende Feldstärke bedingt, verkettet das magnetorheologische Fluid in den Dämpfungskanälen 6 und 7 und wird somit insbesondere in Richtung der Dämpfungskanäle 6 und 7 viskoser, so dass eine stärkere Dämpfung die Folge ist.

Eine Auslenkung des Dauermagneten 10 kann in Richtung der ersten Seite 17 zu dem ersten Wirkraum 18 hin nur gegen die Kraft der hier als Spiralfeder ausgeführten Federeinrichtung 8 erfolgen, während die zweite als Spiralfeder ausgeführte Federeinrichtung 9 gegen den Anschlag 29 drückt, der kurz vor der Grundstellung des Dauermagneten 10 und somit des Ventilkolbens 11 vorgesehen ist.

Wird umgekehrt eine Auslenkkraft in Richtung der zweiten Seite 19 zu dem zweiten Wirkraum 20 hin erzeugt, so wird der Ventilkolben 11 mit dem Dauermagneten 10 gegen die Federkraft der zweiten Federeinrichtung 9 bewegt, wobei ebenfalls wie bei einer Bewegung in der anderen Richtung, das Magnetfeld in den Dämpfungskanälen 6 und 7 entsprechend stärker wird.

Hier wird durch das radial von dem Innenrohr durch eine magnetische Isolatorschicht 34 getrennte Innenrohr 30 ein magnetisch geschlossenes Feld erzeugt, welches in den Dämpfungskanälen 6 und 7 für eine der Stärke des Magnetfelds entsprechend erhöhte Dämpfung führt.

Insgesamt stellt die Erfindung einen Dämpfer 21 zur Verfügung, der sowohl als Hinterraddämpfer als auch als Teil einer Federgabel eingesetzt werden kann und effektiv zur Dämpfung kleinerer und größerer Stöße dienen kann.

Dabei kann durch geeignete Wahl der Federeinrichtungen 8 und 9 und deren Federstärken, sowie durch die Stärke des Dauermagneten und dessen Verstellung ein effektives Dämpfungssystem für ein Fahrrad zur Verfügung gestellt werden, welches in einem einfachen Fall ohne Einstellelemente auskommt. Das ist sehr vorteilhaft, da mit der Anzahl der Einstellelemente auch das Risiko von Falsch- und Fehleinstellungen wächst, wobei ungewünschte Feder- und Dämpfereigenschaften entstehen können. Gegebenenfalls können aber Einstellelemente zur Einstellung der jeweiligen Federstärke vorgesehen sein, um den Dämpfer z.B. an das Fahrergewicht anzupassen.

Insgesamt wird ein axial verschiebbarer "Magnetkolben", d. h. ein ferromagnetischer Kolben 11 mit einem mittigem Permanentmagnet 10 von einer links und rechts davon liegenden Schraubenfeder 8, 9 in der Mittelposition bzw. Grundstellung 16 gehalten.

Wird der Kolben bzw. Ventilkolben 11 durch eine Bewegung des Dämpfers einseitig mit Druck beaufschlagt (Druck mal Fläche = Kraft), so verschiebt sich der Kolben 11 gegen die Federkraft der Feder 8, 9 um wenige Millimeter.

Resultierend aus der Kolbenverschiebung verändert sich der Fluss der Magnetfeldlinien.

In der Mittel- bzw. Grundstellung 16 fließen die Magnetfeldlinien des als Permanentmagneten ausgeführten Dauermagneten 10 quasi im magnetischen "Kurzschluss" durch das direkt an den Kolben 11 angrenzende Mantelrohrstück bzw. Innenrohr 30. Der darüber liegende, von dem magnetorheologischen Fluid (MRF) durchflossene, axial verlaufende Spalt bzw. Strömungskanal 27 wird nur einem geringen Restmagnetismus (Streufeld) ausgesetzt.

Wird der Ventil- bzw. Magnetkolben 11 axial in eine ausgelenkte Stellung 14 oder 15 verschoben (außermittig), so schließt sich das Feld zunehmend über den von dem magnetorheologischen Fluid durchflossenen axial verlaufenden Spalt bzw. Strömungskanal 27 und das darüber liegende Zylinderrohr bzw. Außenrohr 35 aus ferromagnetischem Material.

Der magnetische Kreis schließt sich über die an den Stirnseiten zwischen äußerem und innerem Rohr vorgesehenen MRF-Spalte bzw. Dämpfungskanäle 6 und 7.

Der Magnetfluss im Dämpfungskanal 6, 7 bzw. MRF-Spalt führt zum magnetorheologischen Effekt (MRF-Effekt) mit einer Kettenbildung der Carbonyleisenpartikel, was praktisch zu einer Viskositätserhöhung des Fluids und damit zur Druckzunahme bzw. Kraftzunahme führt.

Der Druck auf den Magnet- bzw. Ventilkolben 11 hängt dabei von der Verfahrgeschwindigkeit ab.

Das System kann von beiden Seiten 17, 19 mit Druck beaufschlagt werden (Druck- und Zugstufe).

Abhängig von der Federkennlinie der zwei als Spiralfedern ausgeführten Federeinrichtungen 8 und 9 und der Magnetfeldumlenkung wird so eine Dämpferkennlinie erzeugt, welche den gewünschten Bedingungen entspricht.

Die zwei als Spiralfedern ausgeführten Federeinrichtungen 8 und 9 liegen vorzugsweise nicht am Ventilkolben 11 an, sondern an vorgelagerten Anschlägen 28 und 29, die mit einem Abstand von z. B. 0,1mm vor dem Ventilkolben 11 enden.

Der Ventilkolben 11 befindet sich dadurch ohne Druckbeaufschlagung immer in der Neutral- bzw. Grundstellung 16 und es wird kein - oder nur ein geringer - magnetorheologischer Effekt auf die magnetorheologische Flüssigkeit in dem Dämpfungskanal 6, 7 bzw. Spalt ausgeübt.

Ohne Federanschläge 28, 29 vor dem Kolben würde der Ventilkolben 11 bei einer einseitigen Verstellung der Stärke der Spiralfeder 8, 9 (z. B. in der Zugstufe) aus der Grundstellung 16 verschoben werden, bis beide Federn 8, 9 wieder im Kräftegleichgewicht sind, was zu einem ungewollten magnetorheologischen Effekt und quasi einer Viskositätserhöhung im Dämpfungskanal 6 bzw. 7 in der Grundstellung 16 führen würde. Dies wird durch die Anschläge 28, 29 verhindert, während gleichzeitig unterschiedliche Kennlinien für die Druck- und die Zugstufe ermöglicht werden.

Durch Verändern der Federvorspannung kann der Kennlinienverlauf variiert werden. Je ein einstellbarer Federauflageteller 28 bzw. 29 für die linke (z.B. Zugstufe) und rechte Feder (Druckstufe) variiert die Federlänge (vorgespannte Länge), so dass die Federkraft von einem anderen Niveau bei Kolbenkontakt startet. Zur Einstellung der Federvorspannungen können mehrere ineinander liegende Wellen vorgesehen sein, ähnlich der Konstruktionen in herkömmlichen Dämpfern.

Es können auch Federn mit progressiver Kennlinie verwendet werden. Ebenso können statt einer Feder pro Seite auch zwei ineinanderlegende Federn (Doppelfeder) mit unterschiedlichen Federcharakteristiken und -längen verwendet werden.

Wie in Fig. 5 dargestellt, die ein Teil des Dämpferkolbens 22 gemäß der Figuren 1 bis 3 vergrößert darstellt, ist in einer Ausnehmung des Dämpferkolbens 22 das Strömungsventil 5 vorgesehen.

Die Dämpfungskanäle 6 und 7 verlaufen hier in axialer Richtung und bilden Strömungskanäle 27, durch welche das magnetorheologische Fluid von der ersten Dämpferkammer2 zur zweiten Dämpferkammer 3 und wieder zurück strömen kann.

Das in Fig. 5 dargestellte Strömungsventil 5 umfasst wiederum einen ersten Wirkraum 18 auf einer ersten Seite 17, welcher mit der ersten Dämpferkammer 2 in Verbindung steht und auch einen zweiten Wirkraum 20 auf einer zweiten Seite 19, welcher mit der zweiten Dämpferkammer 3 in Verbindung steht.

Innerhalb des Innenrohrs 30 ist der Dauermagnet 10 gegen die Kraft der Federeinrichtungen 8 und 9 verschiebbar angeordnet. In Fig. 5 ist der Dauermagnet 10 in Richtung der Federeinrichtung 9 verschoben abgebildet, da der Druck auf der anderen Seite entsprechend groß ist.

Das in Fig. 5 dargestellte Strömungsventil 5 unterscheidet sich von dem Strömungsventil 5 nach Fig. 4 unter anderem darin, dass die Dämpfungskanäle 6 und 7 in axialer Richtung anstatt in radialer Richtung verlaufen.

Weiterhin ist das Strömungsventil 5 nach Fig. 5 grundsätzlich einfacher aufgebaut als das Strömungsventil 5 nach Fig. 4. Das Außenrohr 35 wird hier durch den Dämpfungskolben 22 gebildet, welcher dazu wenigstens teil- oder abschnittsweise aus einem magnetisch leitenden und insbesondere ferromagnetischen Material besteht, um das magnetische Feld dort gezielt zu schließen.

Eine magnetische Isolierung 34 wird in dieser Version bis auf die Bereiche 31 nicht benötigt. In der Grundstellung 16 entsteht ein magnetischer Kurzschluss über den magnetisch leitenden Bereich 32, so wie es zuvor beschrieben wurde.

Bei einer Auslenkung fließt der magnetische Fluss über die magnetisch leitenden Pole, die in axialer Richtung beidseitig an dem Dauermagneten 10 vorgesehen sind und dann radial über das Innenrohr 30 und die axialen Strömungskanäle 6 und 7 und schließt sich über den Dämpferkolben 22. Eine solche ausgelenkte Position ist in Fig. 5 abgebildet, bei der der Dauermagnet 10 aus der Grundstellung 16 in eine ausgelenkte Stellung 15 (Druckstufe) verschoben wurde. Dadurch wird der Dauermagnet 10 in axialer Richtung nicht mehr vollständig magnetisch kurz geschlossen und das Magnetfeld beeinflusst die Dämpfungsspalte 6 und 7 entsprechend.

Die Eisenpole 42 an den axialen Dauermagnetpolen des Dauermagneten 10 ermöglichen bei einer Auslenkung des Dauermagneten 10 bzw. des Ventilkolbens 11 den magnetischen Fluss über die isolierenden Bereiche 31, um so das Magnetfeld zu schließen

Je nach konstruktiver Auslegung können sich die Dämpfungsspalte 6 und 7 als gemeinsamer Dämpfungsspalt über den gesamten Umfang des Strömungsventils 5 erstrecken.

Bei der in Fig.4 dargestellten Version hingegen schließen sich die Magnerfeldlinien axial über den radialen Strömungskanal oder die radialen Strömungskanäle 6 und 7 des Strömungsventils 5.

### Bezugszeichenliste:

- 1: Dämpfereinrichtung
- 2, 3: Dämpferkammer
- 4: Strömungsverbindung
- 5: Strömungsventil
- 6, 7: Dämpfungskanal
- 8, 9: Federeinrichtung
- 10: Magneteinrichtung, Dauermagnet
- 11: Ventilkolben
- 12: Auslenkraum
- 13: Feder, Gasfeder
- 14: ausgelenkte Stellung Zugstufe
- 15: ausgelenkte Stellung Druckstufe
- 16: Grundstellung
- 17: erste Seite
- 18: erster Wirkraum
- 19: zweite Seite
- 20: zweiter Wirkraum
- 21: Dämpfer
- 22: Dämpferkolben
- 23, 24: axiales Ende
- 25: Nordpol
- 26: Südpol
- 27: Strömungskanal
- 28, 29: Anschlag
- 30: Innenrohr
- 31: Isolierschicht
- 32, 33: leitender Bereich
- 34: Isolator
- 35: Außenrohr
- 36: Heatpipeeinrichtung
- 37: Kühleinrichtung
- 38: Konvektionseinheit
- 39: Steuerstange, Kolbenstange
- 40: Wärmerohr
- 41: Kolben
- 42: Eisenpole an den Dauermagnetpolen
- 43: Ausgleichskolben
- 44: Ausgleichsfeder
- 45: Durchgangsöffnung

## Patentansprüche

1. Dämpfereinrichtung (1) für ein Zweirad mit wenigstens einer ersten Dämpferkammer (2) und wenigstens einer zweiten Dämpferkanmer (3), welche über wenigstens eine Strömungsverbindung (4) miteinander gekoppelt sind,
wobei die Strömungsverbindung (4) wenigstens ein Strömungsventil (5) mit wenigstens einem daran vorgesehenen Dämpfungskanal (6, 7) umfasst, wobei wenigstens in dem Dämpfungskanal (6, 7) des Strömungsventils (5) ein magnetorheologisches Fluid vorgesehen ist, wobei das Strömungsventil (5) wenigstens eine Magneteinrichtung (10) umfasst, sodass wenigstens ein Dämpfungskanal (6, 7) des Strömungsventils (5) wenigstens teilweise einem Magnetfeld der Magneteinrichtung (10) aussetzbar ist,
**dadurch gekennzeichnet,**
**dass** das Strömungsventil (5) ferner wenigstens eine Federeinrichtung (8, 9) umfasst und die Magneteinrichtung (10) des Strömungsventils (5) an einem Ventilkolben (11) vorgesehen ist und dass der ventilkolben (11) innerhalb eines Auslenkraums (12) elastisch gegen eine Federkraft der Federeinrichtung (8, 9) auslenkbar aufgenommen ist, so dass das in dem Dämpfungskanal (6, 7) wirkende Magnetfeld der Magneteinrichtung (10) von der elastischen Auslenkung des Ventilkolbens (10) abhängt.

2. Dämpfereinrichtung (1) nach Anspruch 1, wobei das in dem Dämpfungskanal (6, 7) wirkende Magnetfeld der Magneteinrichtung (10) in wenigstens einer ausgelenkten Stellung (15) des Ventilkolbens (11) größer ist als in einer Grundstellung (16) der Magneteinrichtung (10).

3. Dämpfereinrichtung (1) nach mindestens einem der vorhergehenden Absprüche, wobei das Magnetfeld der Magneteinrichtung (10) in der Grundstellung (16) im Wesentlichen an der Magneteinrichtung (10) magnetisch kurzgeschlossen ist.

4. Dämpfereinrichtung (1) nach mindestens einem der vorhergehenden Ansprüche, wobei die Magneteinrichtung (10) als Dauermagnet (10) ausgebildet ist oder wenigstens einen Dauermagneten (10) umfasst.

5. Dämpfereinrichtung (1) nach mindestens einem der vorhergehenden Ansprüche, wobei die Strömungsverbindung einen Strömungskanal (27) außerhalb des Ventilkolbens (11) und/oder innen durch den Ventilkolben (11) hindurch umfasst.

6. Dämpfereinrichtung (1) nach mindestens einem der vorhergehenden Ansprüche, wobei auf der ersten Seite (17) des Ventilkolbens (11) ein erster Wirkraum (18) und auf der zweiten Seite (19) des Ventilkolbens (11) ein zweiter Wirkraum (20) vorgesehen ist und
wobei der erste Wirkraum (18) mit der ersten Dämpferkammer (2) und der zweite Wirkraum (20) mit der zweiten Dämpferkammer (3) gekoppelt ist.

7. Dämpfereinrichtung (1) nach mindestens einem der vorhergehenden Ansprüche, wobei eine Auslenkkraft auf den Ventilkolben (11) von einer Druckdifferenz des Fluids in dem ersten und dem zweiten Wirkraum (18, 20) abhängt.

8. Dämpfereinrichtung (1) nach mindestens einem der vorhergehenden Ansprüche, wobei die beiden Dämpferkammern (2, 3) in einem Dämpfer (21) angeordnet und durch einen Dämpferkolben (22) getrennt sind, wobei insbesondere der Ventilkolben (11) in dem Dämpferkolben (22) angeordnet ist.

9. Dämpfereinrichtung (1) nach mindestens einem der vorhergehenden Ansprüche, wobei der Ventilkolben (11) axial verschieblich an dem Strömungsventil (5) aufgenommen ist und wobei die Magneteinrichtung (10) an einem axialen Ende (23) den Nordpol (25) und an dem anderen axialen Ende (24) den Südpol (26) aufweist.

10. Dämpfereinrichtung (1) nach mindestens einem der vorhergehenden Ansprüche, wobei der erste Wirkraum (18) an einer ersten inneren Ausnehmung und der zweite Wirkraum (20) an einer zweiten inneren Ausnehmung des Strömungsventils (5) vorgesehen ist.

11. Dämpfereinrichtung (1) nach mindestens einem der vorhergehenden Ansprüche, wobei in wenigstens einem wirkraum (18, 20) die Federeinrichtung (8, 9) angeordnet ist, die den Ventilkolben (11) aus einer ausgelenkten Stellung (15) in die Grundstellung (16) zurückdrängt.

12. Dämpfereinrichtung (1) nach mindestens einem der vorhergehenden Ansprüche, wobei ein Anschlag (28, 29) vorgesehen ist, gegen den die Federeinrichtung (8, 9) in der Grundstellung (16) des Ventilkolbens (11) drückt, sodass der Ventilkolben (11) in der Grundstellung (16) unbelastet durch die Federeinrichtung (8, 9) ist.

13. Dämpfereinrichtung (1) nach mindestens einem der vorhergehenden Ansprüche, wobei die Wirkräume (18, 20) von einem Innenrohr (30) begrenzt werden, wobei das Innenrohr (30) in dem Bereich der Magneteinrichtung (10) des Ventilkolbens (11) in der Grundstellung (16) magnetisch leitend ausgebildet ist, während an den Enden der Magneteinrichtung (10) das Innenrohr (30) von einer magnetischen Isolierschicht (31) gebildet wird, an die sich in axialer Richtung magnetisch leitende Bereiche (32, 33) anschließen.

14. Dämpfereinrichtung (1) nach mindestens einem der vorhergehenden Ansprüche, wobei das Innenrohr (30) von einem magnetischem Isolator (34) und einem magnetisch leitendem Außenrohr (35) umgeben wird und/oder wobei der Dämpfungskanal (6, 7) an einem axialen Ende (23, 24) des Innenrohrs (30) vorbeiführt.

15. Dämpfereinrichtung (1) nach mindestens einem der vorhergehenden Ansprüche, wobei die Abdichtung des Dämpferkolbens zur Gehäusewand mittels Dauermagneten erfolgt.

## Claims

1. A damping device (1) for a two-wheeled vehicle having at least one first damper chamber (2) and at least one second damper chamber (3) which are coupled to one another through at least one flow connection (4), the flow connection (4) comprising at least one flow valve (5) provided with at least one damping channel (6, 7), wherein a magnetorheological fluid is provided at least in the damping channel (6, 7) of the flow valve (5), wherein the flow valve (5) comprises at least one magnetic device (10), such that at least one damping channel (6, 7) of the flow valve (5) can at least in part be exposed to a magnetic field of the magnetic device (10), **characterized in that** the flow valve (5) furthermore comprises at least one spring device (8, 9) and the magnetic device (10) of the flow valve (5) is provided on a valve piston (11) and that the valve piston (11) is received in a deflection chamber (12) to resiliently deflect counter to a spring force of the spring device (8, 9) such that the magnetic field of the magnetic device (10) effective in the damping channel (6, 7) depends on the resilient deflection of the valve piston (10).

2. The damping device (1) according to claim 1 wherein the magnetic field of the magnetic device (10) effective in the damping channel (6, 7) is larger in at least one deflected position (15) of the valve piston (11) than in a normal position (16) of the magnetic device (10).

3. The damping device (1) according to at least one of the preceding claims wherein the magnetic field of the magnetic device (10) in the normal position (16) is substantially magnetically short-circuited at the magnetic device (10).

4. The damping device (1) according to at least one of the preceding claims wherein the magnetic device (10) is configured as a permanent magnet (10) or at least comprises a permanent magnet (10).

5. The damping device (1) according to at least one of the preceding claims wherein the flow connection comprises a flow channel (27) external of the valve piston (11) and/or internal, passing through the valve piston (11).

6. The damping device (1) according to at least one of the preceding claims wherein the first side (17) of the valve piston (11) is provided with a first acting space (18) and the second side (19) of the valve piston (11) with a second acting space (20) and wherein the first acting space (18) is coupled with the first damper chamber (2) and the second acting space (20), with the second damper chamber (3).

7. The damping device (1) according to at least one of the preceding claims wherein a deflection force on the valve piston (11) is dependent on a differential pressure of the fluid in the first and second acting spaces (18, 20).

8. The damping device (1) according to at least one of the preceding claims wherein the two damper chambers (2, 3) are disposed in a damper (21) and separated by means of a damper piston (22),wherein especially the valve piston (11) is disposed in the damper piston (22).

9. The damping device (1) according to at least one of the preceding claims wherein the valve piston (11) is received axially displaceably on the flow valve (5) and wherein the magnetic device (10) comprises at one of its axial ends (23) the north pole (25) and at its other axial end (24), the south pole (26).

10. The damping device (1) according to at least one of the preceding claims wherein the first acting space (18) is provided at a first internal recess and the second acting space (20), at a second internal recess of the flow valve (5).

11. The damping device (1) according to at least one of the preceding claims wherein the spring device (8, 9) is disposed in at least one acting space (18, 20) urging the valve piston (11) from a deflected position (15) back to the normal position (16).

12. The damping device (1) according to at least one of the preceding claims wherein an abutment (28, 29) is provided against which the spring device (8, 9) exerts pressure in the normal position (16) of the valve piston (11) such that in the normal position (16) the valve piston (11) is not loaded by the spring device (8, 9).

13. The damping device (1) according to at least one of the preceding claims wherein the acting spaces (18, 20) are delimited by an inner pipe (30) which inner pipe (30) is configured in the area of the magnetic device (10) of the valve piston (11) to be magnetically conducting in the normal position (16), while the inner pipe (30) is formed at the ends of the magnetic device (10) by a magnetic insulation layer (31) which is followed in the axial direction by magnetically conducting areas (32, 33).

14. The damping device (1) according to at least one of the preceding claims wherein the inner pipe (30) is surrounded by a magnetic insulator (34) and a magnetically conducting outer pipe (35) and /or wherein the damping channel (6,7) bypasses one axial end (23, 24) of the inner pipe (30).

15. The damping device (1) according to at least one of the preceding claims wherein sealing of the damper piston relative to the housing wall occurs by means of a permanent magnet.

## Revendications

1. Dispositif d'amortissement (1) pour un deux roues comprenant au moins une première chambre d'amortisseur (2) et au moins une deuxième chambre d'amortisseur (3), lesquelles sont raccordées l'une à l'autre au moins par une conduite d'écoulement (4), ladite conduite d'écoulement (4) comprenant au moins une vanne de régulation de débit (5) munie d'au moins un canal d'amortissement (6, 7), un fluide magnéto-rhéologique étant prévu au moins dans le canal d'amortissement (6, 7) de la vanne de régulation de débit (5), ladite vanne de régulation de débit (5) comprenant au moins un dispositif magnétique (10) de telle sorte qu'au moins un canal d'amortissement (6, 7) de la vanne de régulation de débit (5) est exposable au moins partiellement à un champ magnétique généré par le dispositif magnétique (10),
**caractérisé en ce**
**que** la vanne de régulation de débit (5) comprend en outre au moins un dispositif de ressort (8, 9) et que le dispositif magnétique (10) de la vanne de régulation de débit (5) est prévu sur un piston de vanne (11), et que le piston de vanne (11) est monté déviable à l'intérieur d'un espace de déviation (12) et élastique par rapport à la force élastique du dispositif de ressort (8, 9), de telle sorte que le champ magnétique généré par le dispositif magnétique et agissant dans le canal d'amortissement (6, 7) dépend de la déviation élastique du piston de vanne (10).

2. Dispositif d'amortissement (1) selon la revendication 1, le champ magnétique généré par le dispositif magnétique (10) et actif dans le canal d'amortissement (6, 7) étant, dans au moins une position de déviation (15) du piston de vanne (11), plus grand que dans une position initiale (16) du dispositif magnétique (10).

3. Dispositif d'amortissement (1) selon au moins l'une quelconque des revendications précédentes, le champ magnétique généré par le dispositif magnétique (10) étant mis, en position initiale (16), sensiblement en court-circuit magnétique par rapport au dispositif magnétique (10).

4. Dispositif d'amortissement (1) selon au moins l'une quelconque des revendications précédentes, le dispositif magnétique (10) étant conçu comme aimant permanent (10) ou comprenant au moins un aimant permanent (10).

5. Dispositif d'amortissement (1) selon au moins l'une quelconque des revendications précédentes, la conduite d'écoulement comprenant un canal d'écoulement (27) à l'extérieur du piston de vanne (11) et/ou à l'intérieur dudit piston de vanne (11), le traversant de part en part.

6. Dispositif d'amortissement (1) selon au moins l'une quelconque des revendications précédentes, étant prévu sur le premier côté (17) du piston de vanne (11) un premier rayon d'action (18) et sur le deuxième côté (19) dudit piston de vanne (11) un deuxième rayon d'action (20), et le premier rayon d'action (18) étant raccordé à la première chambre d'amortisseur (2), et le deuxième rayon d'action (20) à la deuxième chambre d'amortisseur (3).

7. Dispositif d'amortissement (1) selon au moins l'une quelconque des revendications précédentes, une force de déviation agissant sur le piston de vanne (11) dépendant d'une différence de pression du fluide dans le premier rayon et dans le deuxième rayon d'action (18, 20).

8. Dispositif d'amortissement (1) selon au moins l'une quelconque des revendications précédentes, les deux chambres d'amortisseurs (2, 3) étant agencées dans un amortisseur (21) et séparées par un piston d'amortisseur (22), le piston de vanne (11) notamment étant agencé dans le piston d'amortisseur (22).

9. Dispositif d'amortissement (1) selon au moins l'une quelconque des revendications précédentes, le piston de vanne (11) étant monté coulissant axialement à la vanne de régulation de débit (5) et le dispositif magnétique (10) présentant à une extrémité (23) axiale le pôle nord (25), à l'autre extrémité axiale (24) le pôle sud (26).

10. Dispositif d'amortissement (1) selon au moins l'une quelconque des revendications précédentes, le premier rayon d'action (18) étant prévu au niveau d'une première entaille interne, et le deuxième rayon d'action (20) au niveau d'une deuxième entaille interne de la vanne de régulation de débit (5).

11. Dispositif d'amortissement (1) selon au moins l'une quelconque des revendications précédentes, au moins dans un rayon d'action (18, 20) étant prévu le dispositif de ressort (8, 9) qui refoule le piston de vanne (11) d'une position déviée (15) dans la position initiale (16).

12. Dispositif d'amortissement (1) selon au moins l'une quelconque des revendications précédentes, une butée (28, 29) étant prévue, contre laquelle vient buter le dispositif de ressort (8, 9) en position initiale (16) du piston de vanne (11), de telle sorte que le piston de vanne (11), en position initiale (16), n'est soumis à aucune force émise par le dispositif de ressort (8, 9).

13. Dispositif d'amortissement (1) selon au moins l'une quelconque des revendications précédentes, les rayons d'action (18, 20) étant délimités par un tube intérieur (30), ledit tube intérieur (30) étant conçu conducteur magnétique dans la zone du dispositif magnétique (10) du piston de vanne (11), en position initiale, alors qu'aux extrémités du dispositif magnétique (10) le tube intérieur (30) est formé par une couche d'isolation magnétique (31) à laquelle se raccordent dans le sens axial des zones conductrices magnétiques (32, 33).

14. Dispositif d'amortissement (1) selon au moins l'une quelconque des revendications précédentes, le tube intérieur (30) étant entouré d'un isolant magnétique (34) et d'un tube extérieur (35) conducteur magnétique et/ou le canal d'amortissement (6, 7) passant le long d'une extrémité axiale (23, 24) du tube intérieur (30).

15. Dispositif d'amortissement (1) selon au moins l'une quelconque des revendications précédentes, l'étanchéification du piston d'amortisseur avec la paroi du boîtier s'effectuant au moyen d'un aimant permanent.
